# EUROPEAN PATENT APPLICATION

(11) **EP 4 617 124 A1**
(43) Date of publication of application: **17.09.2025**
(21) Application number: 23907297.8
(22) Date of filing: 14.09.2023
(51) Int. Cl.: B60R 21/207, B60R 21/215, B60R 21/231

(54) **FAR-SIDE AIRBAG DEVICE OF VEHICLE**

(30) Priority: 22.12.2022 KR 20220181786
(71) Applicant: Autoliv Development AB, 44783 Vargarda (SE)
(72) Inventor: JEONG, Ji Su, Hwaseong-si, Gyeonggi-do 18497 (KR); YU, Jae Woo, Hwaseong-si, Gyeonggi-do 18497 (KR)
(74) Representative: Mewburn Ellis LLP
(86) International application number: PCT/KR2023/013775
(87) International publication number: WO 2024/136010

(57) **Abstract**

The present disclosure relates to a far-side airbag device of a vehicle, the device comprising: an airbag cushion which, at the time of a side collision of a vehicle, is inflated and deployed so as to correspond to a side of the upper body of a passenger; an inflator which, at the time of the side collision of the vehicle, generates gas according to an impact detection signal and supplies same to the airbag cushion; and an airbag cover which receives the airbag cushion and the inflator therein and is mounted in a backrest of a seat. The airbag cover comprises: an inner cover and an outer cover forming a rectangular parallelepiped by being coupled to each other; and a noise prevention part for preventing noise generated at the contact parts of the inner cover and the outer cover when an external force is applied. The noise prevention part is applied to the airbag cover so as to enable effective prevention of noise caused by movement of the contact parts of the inner cover and the outer cover, which are contacting each other, as a result of an external force acting on the airbag cover.

## Description

### [Technical Field]

The present disclosure relates to a far-side airbag device of a vehicle, and more particularly, to a far-side airbag device of a vehicle that protects passengers by preventing a collision between passengers at the time of a side collision of the vehicle.

### [Background Art]

In general, an airbag device of a vehicle is a safety device for protecting a passenger by injecting gas into an airbag according to a signal of an impact sensor at the time of a vehicle collision to rapidly inflate the airbag.

The airbag device is installed on a steering wheel or dashboard, seats, side walls, etc. provided in the vehicle, and inflated toward the front or side of the passenger to protect the passenger at the time of the vehicle collision.

That is, the vehicle may be provided with front airbags which are deployed in front of driver and passenger seats, curtain airbags and side airbags which are deployed in a direction of a side collision (hereinafter referred to as a "collision side") to protect passengers, knee airbags for protecting passengers' knees, and the like.

The side airbags include a so-called near side airbag, which is inflated and deployed between the passenger and vehicle body components such as a door, etc. and protects the passenger from the vehicle body components protruding inward due to an impact of a side collision, and a far side airbag or center side airbag, which limits the movement of the passenger toward the inside of the vehicle due to the reaction of the side collision.

The far side airbag is deployed between the passenger and a passenger seated next to the passenger at the time of a vehicle collision to prevent mutual collision between the passengers, reduce an impact applied to the passengers, and prevent the passengers from being thrown out of the vehicle due to the impact.

For example, the present applicant has filed a patent by disclosing a configuration of a far-side airbag device in the following Patent Documents 1 and 2.

Meanwhile, in order to perform the functions described above, the far-side airbag needs to be able to stably support the passenger and absorb the impact when colliding with the passenger.

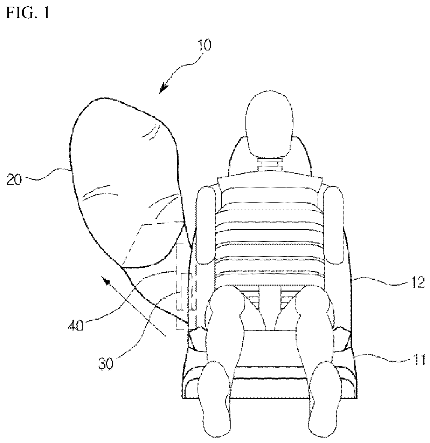

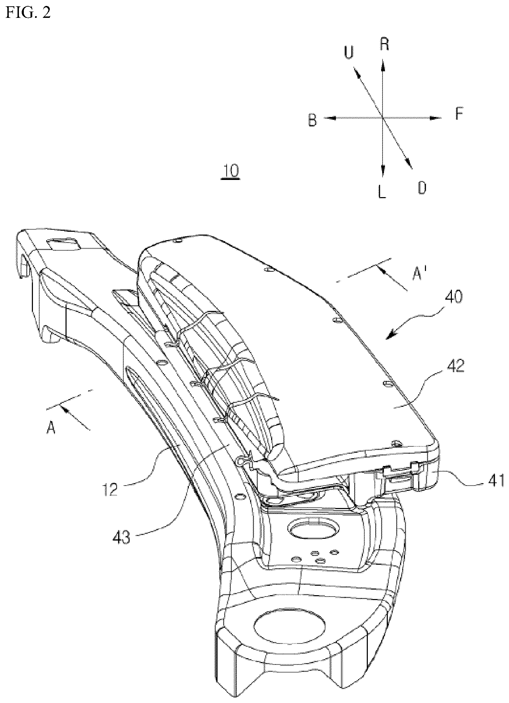

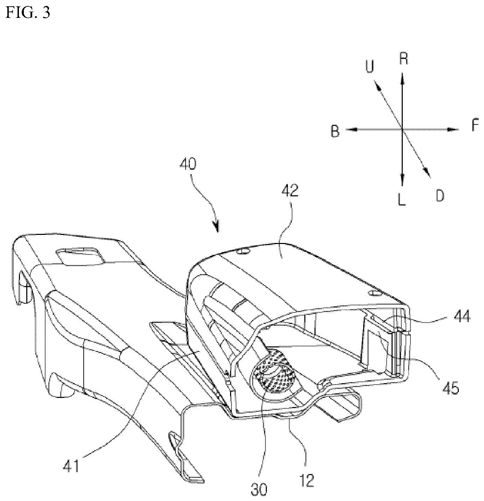

For example, FIG. 1 is a diagram showing a state in which a far-side airbag according to the prior art is deployed, FIG. 2 is a diagram showing a state in which an airbag cover receiving an airbag cushion shown in FIG. 1 is installed on a backrest, and FIG. 3 is a cross-sectional view taken along line A-A' shown in FIG. 2.

As shown in FIG. 1, a far-side airbag device 10 according to the prior art includes an airbag cushion 20 which is inflated and deployed so as to correspond to a side of the upper body of a passenger at the time of a side collision of a vehicle, and an inflator 30 which generates gas by an impact detection signal at the time of the side collision of the vehicle and supplies the gas to the airbag cushion 20.

The airbag cushion 20 is folded in a rolling or folding manner and then is mounted on one side of a backrest frame 12 of a seat 11, the inner side facing the other passenger, while being received inside the airbag cover 40 together with the inflator 30.

As shown in FIGS. 2 and 3, the airbag cover 40 consists of an inner cover 41 and an outer cover 42 that are coupled to each other to form an approximately parallelepiped shape, and when the airbag cushion 20 is inflated and deployed, the outer cover 42 rotates around a connection part 43 connected to the rear end of the inner cover 41 to draw the airbag cushion 20 out of the airbag cover 40.

As such, the airbag cover 40 applied to the far-side airbag device 10 according to the prior art has a structure in which the inner cover 41 and the outer cover 42 are coupled to each other by contacting each other.

Usually, the inner cover 41 and the outer cover 42 are kept in contact with each other.

On the other hand, when an external force is applied or a vibration or impact is applied to the airbag cover 40, there was a problem in that noise was generated while movement occurs at a contact surface between the inner cover 41 and the outer cover 42.
(Patent Document 1) Korean Patent Registration No. 10-1916007 (issued on November 8, 2018)
(Patent Document 2) Korean Patent Registration No. 10-1781387 (issued on February 20, 2017)

### [Disclosure]

### [Technical Problem]

An object of the present disclosure is to solve the above-mentioned problems, and to provide a far-side airbag device of a vehicle which is inflated and deployed between passengers at the time of a side collision of the vehicle to prevent a collision between the passengers.

Another object of the present disclosure is to provide a far-side airbag device of a vehicle, which can prevent noise generation by blocking movement generated at a contact surface between an inner cover and an outer cover coupled to each other when an external force is applied to an airbag cover receiving an airbag cushion and an inflator.

### [Technical Solution]

In order to achieve the object, an aspect of the present disclosure provides a far-side airbag device of a vehicle including: an airbag cushion which is inflated and deployed so as to correspond to a side of the upper body of a passenger at the time of a side collision of a vehicle; an inflator which generates gas according to an impact detection signal and supplies the gas to the airbag cushion at the time of the side collision of the vehicle; and an airbag cover which receives the airbag cushion and the inflator therein and is mounted in a backrest of a seat, in which the airbag cover includes: an inner cover and an outer cover coupled to each other to form a rectangular parallelepiped; and a noise prevention part for preventing noise generated at the contact parts of the inner cover and the outer cover when an external force is applied.

### [Advantageous Effects]

As described above, according to the far-side airbag device of the vehicle according to the present disclosure, the noise prevention part is applied to the airbag cover to obtain an effect of preventing movement of the contact parts of the inner cover and the outer cover which are in contact with each other due to an external force acting on the airbag cover.

Accordingly, according to the present disclosure, there is obtained an effect of effectively preventing noise caused by movement occurring at the contact part of the airbag cover.

### [Brief Description of the Drawings]

FIG. 1 is a diagram showing a state in which a far-side airbag according to the prior art is deployed,
FIG. 2 is a diagram showing a state in which an airbag cover receiving an airbag cushion shown in FIG. 1 is installed on a backrest,
FIG. 3 is a cross-sectional view along line A-A' shown in FIG. 2,
FIG. 4 is a diagram showing a state in which a far-side airbag device of a vehicle according to a preferred embodiment of the present disclosure is installed on a backrest frame,
FIG. 5 is a diagram showing a state in which an airbag cover shown in FIG. 4 is deployed,
FIG. 6 is a cross-sectional perspective view along line B-B' shown in FIG. 5, and
FIG. 7 is an enlarged cross-sectional view of a portion where an inner cover and an outer cover are coupled to each other.

### [Best Mode of the Invention]

Hereinafter, a far-side airbag device of a vehicle according to a preferred embodiment of the present disclosure will be described in detail with reference to the accompanying drawings.

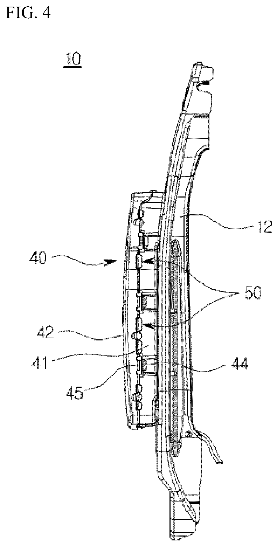

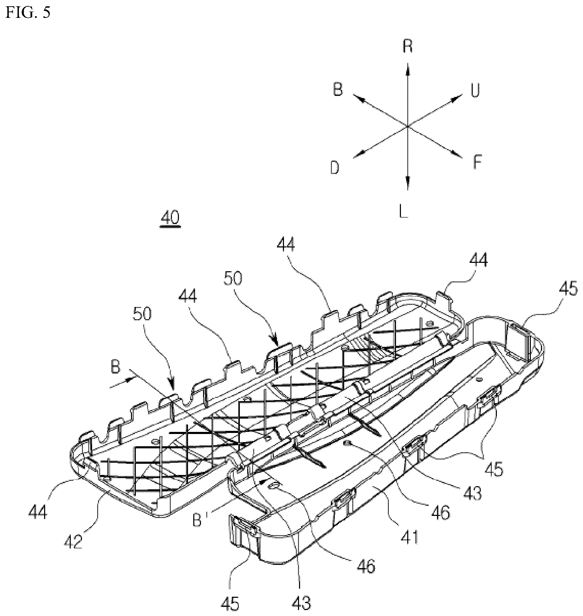

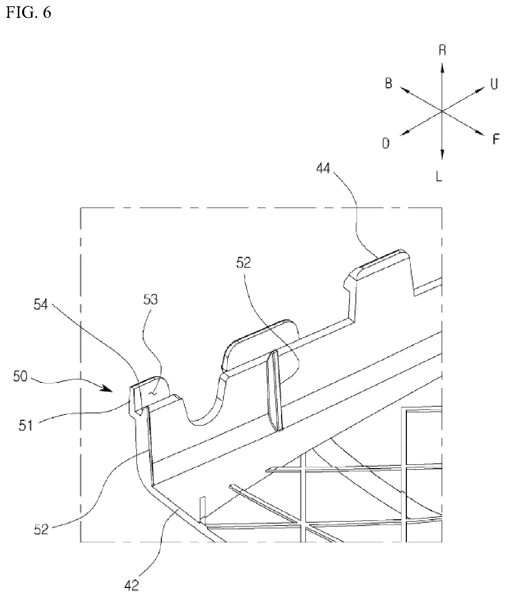

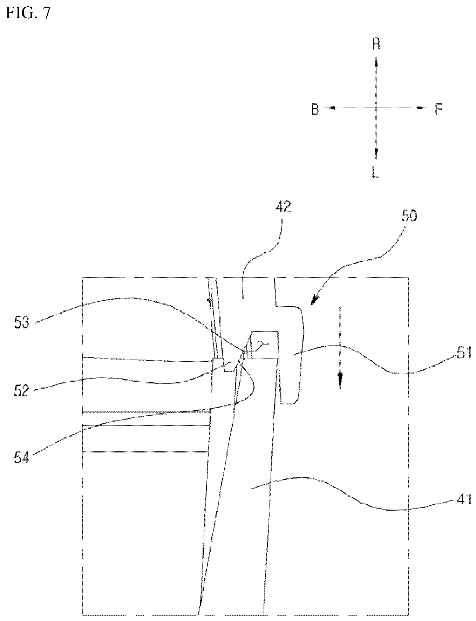

FIG. 4 is a diagram showing a state in which a far-side airbag device of a vehicle according to a preferred embodiment of the present disclosure is installed on a backrest frame, FIG. 5 is a diagram showing a state in which an airbag cover shown in FIG. 4 is deployed, FIG. 6 is a cross-sectional perspective view along line B-B' shown in FIG. 5, and FIG. 7 is an enlarged cross-sectional view of a portion where an inner cover and an outer cover are coupled to each other.

Hereinafter, a direction toward the front of the vehicle centered on the seat 11 is referred to as a 'front (F)', and a direction opposite to the front, that is, the direction in which the backrest is installed centered on the seat 11, is referred to as a 'back (B)'. In addition, terms indicating directions, such as 'left (L)', 'right (R)', 'up (U)' and 'down (D)' are defined as indicating each direction based on the front side and the back side.

In the embodiment, a configuration of the far-side airbag device 10 shown in FIG. 1 is described. Accordingly, the same configuration will be described by assigning the same drawing symbols.

The far-side airbag device 10 for the vehicle according to a preferred embodiment of the present disclosure includes, as shown in FIGS. 1 and 4, an airbag cushion 20 which is inflated and deployed so as to correspond to a side of the upper body of a passenger at the time of a side collision of the vehicle, an inflator 30 which generates gas by an impact detection signal at the time of the side collision of the vehicle and supplies the gas the airbag cushion 20, and an airbag cover 40 which receives the airbag cushion 20 and the inflator 30 therein and is mounted on a backrest 12 of the seat 11.

The airbag cushion 20 is inflated and deployed forward, upward and downward from the backrest 12 of the seat 11 so as to correspond to the pelvic portion and the entire upper body of the passenger, i.e., the sides of the abdomen, chest, neck and head of the passenger. As such, the airbag cushion 20 is inflated and deployed between the passenger and the other passenger (hereinafter referred to as an "opposite passenger"), and functions to safely protect the passenger from collision between the passengers due to an impact of the side collision.

To this end, the airbag cushion 20 includes an inner panel that contacts the right side of the passenger, i.e., a driver, and an outer panel that contacts the left side of the opposite passenger, and the edges of the inner panel and the outer panel may be bonded by a sewing method or the like to form a bag shape.

The airbag cushion 20 is formed so as to be inflated and deployed in an approximately circular, oval, or parallelepiped shape, and may be inflated and deployed forward, upward and downward from the right side of the passenger.

The inflator 30 has a function of igniting gunpowder inside at the time of a collision accident of the vehicle and supplying gas through an introduction part provided on one side of the airbag cushion 20.

Such an inflator 30 is formed in an approximately cylindrical shape, and a pair of stud bolts that are coupled to the backrest frame 12 by penetrating through the airbag cover 20 may be installed on one side of the inflator 30.

The airbag cover 40 may include an inner cover 41 and an outer cover 42 that are coupled to each other so as to form an approximately rectangular parallelepiped shape, as shown in FIGS. 4 and 5.

The inner cover 41 and the outer cover 42 may each be formed in an approximately parallelepiped shape with an open surface to be coupled to each other. Here, it is described that the inner cover 41 is disposed on the left side as shown in FIG. 5 so as to contact the backrest frame 12, and the outer cover 42 is disposed on the right side so as to face the other passenger.

The outer cover 42 may rotate around a connection part 43 connected to the rear end of the inner cover 41 when the airbag cushion 20 is inflated and deployed to draw the airbag cushion 20 outward.

The inner cover 41 and the outer cover 42 may be formed with coupling protrusion parts 44 and coupling hole parts 45 so as to be coupled to each other.

That is, a plurality of coupling hole parts 45 each having a coupling hole may be formed in the front and upper and lower edges of the inner cover 41, and a plurality of coupling protrusion parts 44 may be formed on the outer cover 42 to be coupled to the plurality of coupling hole parts 45, respectively. Here, each coupling protrusion part 44 may be formed in a hook shape that engages with the coupling hole part 45, so as not to be separated by an external vibration or impact while being coupled to each coupling hole part 45.

In addition, a pair of through holes 46 may be formed in the inner cover 41 to allow a pair of stud bolts coupled to the inflator 30 to penetrate.

For example, since the pair of stud bolts are each fastened to one side of the inflator 30 so as to be separated at a predetermined interval in a vertical direction, the pair of through holes 46 may be formed at positions corresponding to the pair of stud bolts, i.e., approximately in the central and lower portions of the inner cover 41, respectively.

Thus, a pair of stud bolts 31 are coupled to fixing holes formed in the backrest frame 12 through each through hole 46 of the inner cover 41 while the inflator 30 is connected to the introduction part of the airbag cushion 20, and may be firmly fixed by fastening a nut.

Meanwhile, in the prior art, the inner cover 41 and the outer cover 42 are coupled to each other. Therefore, an outer end of the side wall of the inner cover 41 and an inner end of the side wall of the outer cover 42 are kept in contact with each other.

However, if an external force or a vibration or impact is applied to the airbag cover 40 (hereinafter collectively referred to as "an application of the external force"), noise may be generated while the outer end of the side wall of the inner cover 41 and the inner end of the side wall of the outer cover 42 are alternated with each other.

That is, in order to couple the inner cover 41 and the outer cover 42, the plurality of coupling protrusion parts 44 and coupling hole parts 45 were applied, but while the side walls of the inner cover 41 and the outer cover 42 move due to an external force, portions where the coupling protrusion parts 44 and the coupling hole parts 45 are not provided are alternated with each other to generate noise.

To solve these problems, in the embodiment, a noise prevention part 50 is applied to the side wall portion of the outer cover 41 that comes into contact with the side wall of the inner cover 41.

As shown in FIGS. 6 and 7, the noise prevention part 50 may include a plurality of guide members 51 which are formed to extend from the side wall of the outer cover 42 to fix the outer surface of the side wall of the inner cover 41, and a support member 52 which is formed on the inner side of the side wall of the outer cover 42 to fix the inner surface of the side wall of the inner cover 41.

The plurality of guide members 51 may be formed to extend to the outer surface from the side wall of the outer cover 42, that is, to the right side from the rear surface when viewed in FIG. 6.

One or a plurality of guide members 51 is provided between the plurality of coupling protrusion parts 44 and may be formed in an approximately plate shape with preset thickness and width to have sufficient rigidity.

When the inner cover 41 and the outer cover 42 are coupled to each other, the guide member 51 is disposed toward the left as shown in FIG. 7 to fix the outer surface of the side wall of the inner cover 41 facing the right, thereby preventing deformation of the inner cover 41 in an outer direction, i.e., forward, due to an external force.

A plurality of support members 52 may be provided as support ribs formed in the left and right directions along the inner surface of the side wall of the outer cover 42, respectively. Therefore, the plurality of support members 52 may support the side wall of the outer cover 42 to reinforce the rigidity of the side wall of the outer cover 42.

The plurality of support members 52 may be formed one or more at a position corresponding to each support member 51 on the inner surface of the side wall of the outer cover 42.

Each support member 52 may be formed to elongate outward from the side wall of the outer cover 42. Therefore, when the inner cover 41 and the outer cover 42 are coupled to each other, the support member 52 may fix the inner surface of the side wall of the inner cover 41 to prevent deformation of the inner cover 41 in an inner direction, i.e., backward, due to an external force.

Meanwhile, as shown in FIG. 7, a press-fit space 53 may be formed between each guide member 51 and the outer end, i.e., the left end of the support member 52, so that the side wall of the inner cover 41 is coupled by a press-fitting method.

To this end, an inclined surface 54 may be formed at the front end, that is, the left end of the support member 52 that extends from the side wall of the outer cover 42, so that the side wall of the inner cover 41 is pressed-in.

The inclined surface 54 may be formed to be inclined toward the left rear side so that the side wall of the inner cover 41 is inserted in contact with the inclined surface 54.

Therefore, the press-fit space 53 becomes narrower from the outer end to the inner end, that is, from the left to the right.

Accordingly, the side wall of the inner cover 41 may be coupled to the press-fit space 53 in a wedge manner to be firmly fixed.

Next, a coupling relationship and an operating method of the far-side airbag device of the vehicle according to a preferred embodiment of the present disclosure will be described.

First, an operator folds the airbag cushion 20 by rolling or folding while connecting the inflator 30 to the introduction part of the airbag cushion 20. The folded airbag cushion 20 and the inflator 30 are received in a space formed in the inner cover 41 of the airbag cover 40.

Next, the outer cover 42 of the airbag cover 40 is rotated 180° around a connection part 43 to couple the inner cover 41 and the outer cover 42 to each other.

At this time, a plurality of coupling protrusion parts 44 provided on the outer cover 42 are coupled to a plurality of coupling hole parts 45 formed in the inner cover 41, respectively.

In addition, the side wall of the inner cover 41 is pressed into the press-fit space 53 formed between the guide member 51 and the support member 52 of the noise prevention part 50 provided at the outer cover 42.

The far-side airbag device 10 assembled through this process is mounted on one side, that is, the left side of the backrest frame 12 of the seat 11.

Accordingly, since the side wall of the inner cover 41 is coupled to the noise prevention part 50 applied to the outer cover 42 by a press-fitting method, deformation is prevented even if an external force, vibration, or impact is applied to the airbag cover 40 while the vehicle is driving.

That is, the guide member 51 of the noise prevention part 50 prevents the side wall of the inner cover 41 from moving outward, and the support member 52 prevents the side wall of the inner cover 41 from moving inward.

Accordingly, according to the present disclosure, it is possible to prevent noise generated when the contact parts of the inner cover and the outer cover are alternated with each other by an external force while moving.

Through the process described above, according to the present disclosure, it is possible to prevent movement of the contact parts of the inner cover and the outer cover that are in contact with each other by an external force applied to the airbag cover by applying the noise prevention member to the airbag cover.

Accordingly, according to the present disclosure, it is possible to effectively prevent noise caused by movement of the contact parts of the airbag covers.

Hereinabove, the present disclosure made by the present inventors has been specifically described according to the embodiments, but the present disclosure is not limited to the embodiments, and can be modified in various manners in the scope without departing from the gist.

**[Explanation of Reference Numerals and Symbols]**

| | | | |
|---|---|---|---|
| 10: | Far-side airbag device of vehicle | | |
| 11: | Seat | 12: | Backrest frame |
| 20: | Airbag cushion | | |
| 30: | Inflator | | |
| 40: | Airbag cover | 41, 42: | Inner and outer covers |
| 43: | Connection part | 44: | Coupling protrusion part |
| 45: | Coupling hole part | 46: | Through hole |
| 50: | Noise prevention part | | |
| 51: | Guide member | 52: | Support member |
| 53: | Press-fit space | 54: | Inclined surface |

## Claims

1. A far-side airbag device of a vehicle comprising:
an airbag cushion which is inflated and deployed so as to correspond to a side of an upper body of a passenger at time of a side collision of a vehicle;
an inflator which generates gas according to an impact detection signal and supplies the gas to the airbag cushion at the time of the side collision of the vehicle; and
an airbag cover which receives the airbag cushion and the inflator therein and is mounted in a backrest of a seat,
wherein the airbag cover comprises: an inner cover and an outer cover coupled to each other to form a rectangular parallelepiped; and
a noise prevention part for preventing noise generated at contact parts of the inner cover and the outer cover when an external force is applied.

2. The far-side airbag device of the vehicle of claim 1, wherein the inner cover and the outer cover are coupled to each other by a plurality of coupling protrusion parts and coupling hole parts provided at corresponding positions, and
the noise prevention part comprises a plurality of guide members which are formed by extending from a side wall of the outer cover to fix an outer surface of a side wall of the inner cover, and
a support member which is formed on an inner side of the side wall of the outer cover to fix an inner surface of the side wall of the inner cover.

3. The far-side airbag device of the vehicle of claim 2, wherein the guide member is formed in a plate shape having preset thickness and width.

4. The far-side airbag device of the vehicle of claim 2, wherein the support member is formed to elongate from the side wall of the outer cover, and
a press-fit space is formed at outer ends of the guide member and the support member so that the side wall of the inner cover is coupled.

5. The far-side airbag device of the vehicle of claim 4, wherein one or more of the support members are formed at positions corresponding to the guide member on the inner surface of a side of the inner cover to reinforce rigidity of the side wall of the outer cover.

6. The far-side airbag device of the vehicle of claim 4, wherein an inclined surface is formed at a front portion elongating from the side wall of the outer cover in the support member so that the side wall of the inner cover is pressed-in, and
the press-fit space becomes narrower as the side walls of the inner cover are coupled.

7. The far-side airbag device of the vehicle of any one of claims 2 to 6, wherein one or more of the guide members and the support members are provided between the plurality of coupling protrusion parts and coupling hole parts.
